# EUROPÄISCHE PATENTSCHRIFT

(11) **EP 2 347 846 B1**
(45) Veröffentlichungstag und Bekanntmachung des Hinweises auf die Patenterteilung: **09.01.2013**
(21) Anmeldenummer: 10000503.2
(22) Anmeldetag: 20.01.2010
(51) Int. Cl.: B23D 59/00

(54) **Zirkularsäge**
Circular saw
Scie circulaire

(43) Veröffentlichungstag der Anmeldung: 27.07.2011
(73) Patentinhaber: Reika GmbH & Co. KG, 58093 Hagen (DE)
(72) Erfinder: Braun, Hans-Jörg, 58093 Hagen (DE); Martin, Klaus-Dieter, 58300 Wetter (DE)
(74) Vertreter: Dörner, Kötter & Kollegen

(56) Entgegenhaltungen:
- EP-A1- 0 490 328
- DE-A1- 4 312 162

## Beschreibung

Die Erfindung betrifft eine Zirkularsäge nach dem Oberbegriff des Patentanspruchs 1. Die Erfindung betrifft weiterhin ein Verfahren zur Steuerung einer Zirkularsäge nach dem Patentanspruch 10.

Beim Wirbelverfahren handelt es sich um ein spanabhebendes Verfahren, bei dem das Werkzeug das Werkstück spiralwirbelartig umkreist. Die Einschnitttiefe wird durch ein oder mehrere, mit hoher Schnittgeschwindigkeit umlaufende Messer, in einem Arbeitsgang hergestellt. Dabei wälzt sich die durch das Schneidwerkzeug gebildete Innenmantelfläche auf der zylindrischen Außenmantelfläche des zu bearbeitenden Werkstücks ab. Dieser Bewegungsvorgang wird der sich ständig kreisenden Bewegung des Schneidwerkzeugs überlagert.

Das Wirbelverfahren, beispielsweise bekannt aus der EP 0 490 328 B1, hat den Vorteil, dass eine Vielzahl von Schneidwerkzeugen, insbesondere Scheidstählen, nebeneinander angeordnet werden können, die über einen größeren Segmentbereich gleichzeitig in Eingriff mit dem Werkstück stehen. Beim Wirbeltrennen wird dabei ein Wirbelsägewerkzeug mit innenliegender Verzahnung - nachfolgend unter dem Begriff "Sägeblatt" subsumiert - eingesetzt. Die Schneidzähne des Sägeblatts können tangential in das Werkstück eindringen. Auf Grund des Wirbelverfahrens braucht der wirksame Eindringradius des Sägeblatts nur die Wandstärke des Werkstücks zu umfassen. Handelt es sich hierbei um ein Vollmaterial, so muss das Sägeblatt nur bis zum Mittelpunkt des Vollmaterials eindringen, da die weitere Hälfte des Werkstücks durch die Umkreisung des Sägeblatts abgetrennt wird. Derartige Wirbeltrennvorrichtungen werden nachfolgend "Zirkularsäge" genannt.

Der Einsatz des Wirbelverfahrens zum Trennen von rohr- und stangenförmigen Werkstücken hat sich bewährt, insbesondere können hierbei die Bearbeitungszeiten deutlich reduziert werden. Problematisch erweist sich jedoch die ungleichmäßige Beanspruchung der kostenintensiven Sägeblätter, welche auch bei nur bereichsweiser Abnutzung von Sägezähnen vollständig ausgewechselt werden müssen.

Hier will die Erfindung Abhilfe schaffen. Der Erfindung liegt die Aufgabe zu Grunde, eine Zirkularsäge zu schaffen, welche eine gleichmäßigere Beanspruchung des Sägeblatts ermöglicht. Gemäß der Erfindung wird diese Aufgabe durch die Merkmale des Patentanspruchs 1 gelöst.

Mit der Erfindung ist eine Zirkularsäge geschaffen, welche eine gleichmäßige Beanspruchung des Sägeblatts ermöglicht. Es hat sich gezeigt, dass eine erhebliche Beanspruchung des Sägeblatts beim Einstechen in das Werkstück auftritt. Durch die Erfassung des Schwingungsverlaufes der einzelnen Zähne des Sägeblatts und dem Einstechen des Sägeblatts mit einem Sägeblattbereich mit geringer gemessener Schwingungsamplitude wird das Sägeblatt jeweils mit seinem am wenigsten abgenutzten Bereich in das Werkstück eingetaucht. Hierdurch ist eine gezielte, gleichmäßige Beanspruchung des Sägeblatts beim Einstechvorgang bewirkt.

In Weiterbildung der Erfindung ist bei jedem Einstechvorgang das Sägeblatt über die Steuereinheit zum Zeitpunkt des Einbringens in das Werkstück derart positionierbar, dass das Eindringen mit dem Zahn des Sägeblatts erfolgt, welches die geringste Schwingungsamplitude aufweist. Hierdurch ist eine auf den einzelnen Zahn des Sägeblatts gerichtete Beanspruchung des Sägeblatts beim Eindringen in das Werkstück bewirkt.

In Ausgestaltung der Erfindung ist die Auswertungseinheit mit einer Datenbank verbunden, in der das ermittelte Schwingungsverhalten der einzelnen Sägezähne über die Zeit speicherbar ist. Hierdurch ist der Abnutzungsverlauf der einzelnen Sägezähne verfolgbar.

Bevorzugt erfolgt die Ansteuerung des Wirbelaggregats beim Einstechvorgang durch die Steuereinheit auf Basis der in der Datenbank hinterlegten Schwingungsverhaltens-Historie der einzelnen Sägezähne. Hierdurch ist die Berücksichtigung eines detaillierten Verschleißbildes des Sägeblatts und damit eine gleichmäßige Abnutzung des Sägeblatts bewirkt.

In weiterer Ausgestaltung der Erfindung ist die Auswertungseinheit mit einer Warneinrichtung verbunden und derart eingerichtet, dass bei Überschreiten eines Schwingungsgrenzwertes einer definierten Anzahl von Sägezähnen ein Warnsignal ausgelöst wird. Hierdurch ist ein rechtzeitiger Wechsel des Sägeblatts bei Abnutzung ermöglicht, wodurch eine hohe Arbeitsqualität erzielt ist.

In weiterer Ausgestaltung der Erfindung ist die Auswertungseinheit mit einer Ausgabeeinheit verbunden, über die das Schwingungsverhalten der einzelnen Sägezähne eines Sägeblatts über die Zeit abrufbar ist. Hierdurch ist eine verbesserte Qualitätssicherung des Arbeitsprozesses ermöglicht.

In Weiterbildung der Erfindung ist die Auswertungseinheit mit einer Eingabeeinheit verbunden, über welche ein Wechsel des Sägeblatts hinterlegbar ist. Hierdurch ist die Zuordnung eines in der Datenbank abgelegten Schwingungsverhaltens zu einem Sägeblatt ermöglicht.

In Ausgestaltung der Erfindung ist das Sägeblatt mit einer eindeutigen Kennung versehen, welche mittels einer angeordneten, mit der Auswertungseinheit verbundenen Leseeinheit auslesbar ist. Hierdurch ist eine Zuordnung von ermittelten Schwingungsverhalten zu einzelnen Sägeblättern ermöglicht, wodurch Aussagen zum Abnutzungsverhalten auch von aufgearbeiteten Sägeblättern möglich sind. Basiert darauf ist beispielsweise eine Aussage zu veränderten Standzeiten aufgearbeiteter Sägeblätter möglich.

In weiterer Ausgestaltung der Erfindung ist ein Werkzeugwechselsystem angeordnet, das mit der Auswertungseinheit verbunden ist, wobei bei Überschreiten eines Schwingungsgrenzwertes einer definierten Anzahl von Sägezähnen ein Werkzeugwechsel ausgelöst wird. Hierdurch ist ein automatischer Werkzeugwechsel in Abhängigkeit der Abnutzung der eingesetzten Sägeblätter ermöglicht, wodurch eine hohe Qualität einer großen Anzahl von Trennvorgängen, wie sie beispielsweise bei personallosen Fertigungsinseln erforderlich ist, ermöglicht wird.

Der Erfindung liegt weiterhin die Aufgabe zu Grunde, ein Verfahren zur Steuerung einer Zirkularsäge zu schaffen, welches eine gleichmäßige Beanspruchung des Sägeblatts ermöglicht. Gemäß der Erfindung wird diese Aufgabe durch die Merkmale des Patentanspruchs 10 gelöst.

Mit der Erfindung ist ein Verfahren zur Steuerung einer Zirkularsäge geschaffen, welches eine gleichmäßige Beanspruchung des Sägeblatts ermöglicht. Durch die kontinuierliche Erfassung der Schwingungen des Gehäuses der Zirkularsäge sowie der Drehposition des Sägeblatts der Zirkularsäge kann das Schwingungsverhalten eines jeden Sägezahns bzw. eines definierten Bereichs des Sägeblatts ermittelt werden. Durch Berücksichtigung des Schwingungsverhaltens der einzelnen Sägezähne bzw. Sägezahnbereiche beim Einstechvorgang des Sägeblatts in ein Werkstück, derart, dass der Einstich mit dem Sägezahn bzw. dem definierte Sägezahnbereich des Sägeblatts erfolgt, der die geringste Schwingungsamplitude aufweist, ist eine über mehrere Trennvorgänge gleichmäßige Beanspruchung des Sägeblatts in Bezug auf die jeweiligen Einstichvorgänge bewirkt.

In Weiterbildung der Erfindung werden die Gehäuseschwingungen hinsichtlich einer definierten maximalen Grenzamplitude überwacht, wobei bei Erreichen der Grenzamplitude eine Phasenverschiebung des Antriebs der Zirkularsäge vorgenommen wird. Hierdurch ist eine Verschiebung der Schwingungsbelastung des Sägeblatts bewirkt, was wiederum zu einer gleichmäßigeren Beanspruchung des Sägeblatts führt.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

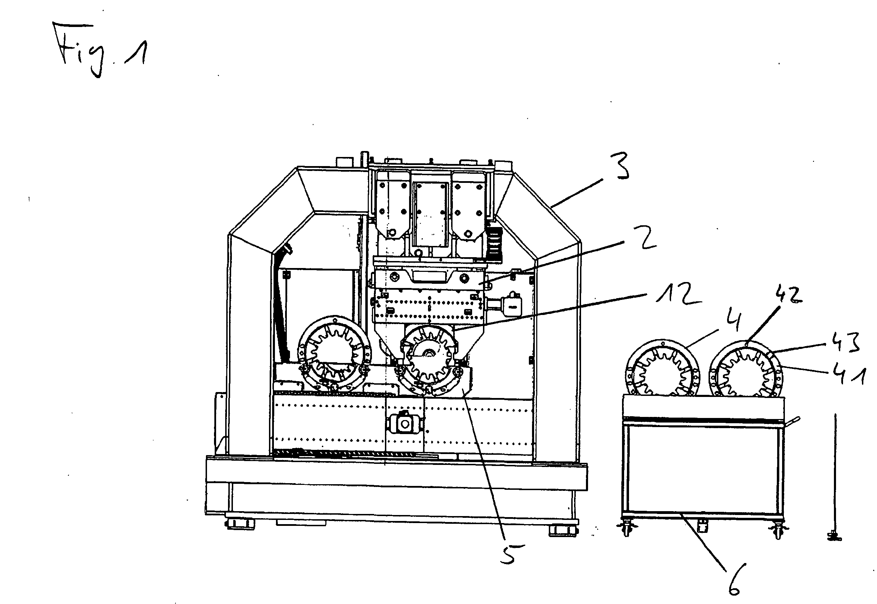

- Figur 1: die schematische Darstellung einer Zirkularsäge in der Ansicht von hinten;

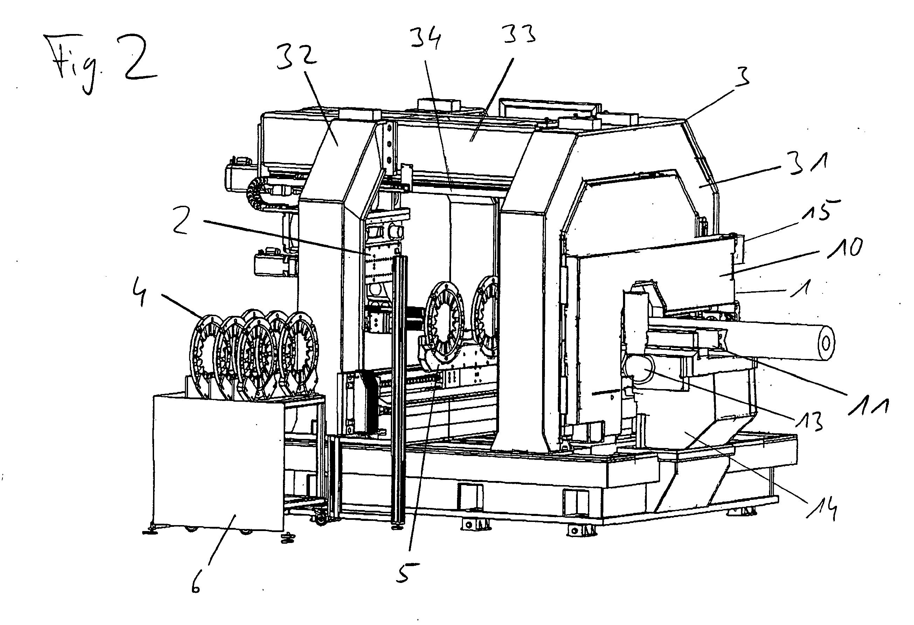

- Figur 2: die Darstellung der Vorrichtung aus Fig. 1 in räumlicher Darstellung und
- Figur 3: die schematische Darstellung der Auswert- und Steuerungsanordnung der Zirkularsäge aus Figur 1.

Die als Ausführungsbeispiel gewählte Zirkularsäge umfasst ein in einem Gehäuse 10 angeordnetes Wirbelaggregat 1 mit einer Werkstückzuführung 11 sowie einen Abgreifer 2, welche in einem Rahmensystem 3 angeordnet sind. Das Rahmensystem 3 ist dabei im Wesentlichen gebildet aus zwei parallel zueinander angeordneten Portalen 31, 32, die kopfseitig über einen Verbindungsträger 33 miteinander verbunden sind. Dabei ist das Wirbelaggregat 1 an dem Aggregatportal 31 befestigt; das Stützportal 32 dient dem Auflager des Verbindungsträgers 33. An dem Verbindungsträger 33 ist eine Schiene 34 befestigt, an der der Abgreifer 2 verschiebbar angeordnet ist.

Das Wirbelaggregat 1 umfasst eine Werkzeugaufnahme 12 zur Aufnahme eines Sägeblatts 4, die mit einem - nicht dargestellten - Antrieb verbunden ist. Der Antrieb verfügt über einen Drehgeber 13, der eine genaue Erfassung sowie Positionierung der Werkzeugaufnahme 12 und somit auch des von dieser aufgenommenen Sägeblatts 4 ermöglicht. Die Werkzeugaufnahme 12 ist mit einer Kreuztischanordnung verbunden, mittels derer sie über ein Steuerung 14 auf definierten Kurven verfahrbar ist. An dem Gehäuse 10 des Wirbelaggregats 1 ist weiterhin ein Schwingungsmesser 15 zur Erfassung der Schwingungen des Wirbelaggregats 1 angeordnet.

Die Werkzeugaufnahme 12 ist im Wesentlichen trichterförmig ausgebildet. Diese Ausformung wirkt sich begünstigend auf die Spanabfuhr aus. Umlaufend ihrer kreisförmigen Öffnung ist in der Werkzeugaufnahme 12 ein Anlageflansch zur passgenauen Anlage eines Sägeblatts 4 angeordnet. Zur definierten Lage des Sägeblatts 4 in der Werkzeugaufnahme 12 ist der Anlageflansch mit einem - nicht dargestellten - Indexierstift versehen, welcher in eine in dem Schneidenträgerring 41 des Sägeblatts 4 eingebrachte Indexierbohrung 42 einführbar ist. Im Bereich der Werkzeugaufnahme 12 ist weiterhin eine RFID-Antenne 16 zum Auslesen der in einem an dem Schneidenträgerring 41 des Sägeblatts 4 angeordneten RFID-Chip 43 abgelegten Werkzeuginformationen angeordnet. (Alternativ kann auch eine mechanische Codierung der Werkzeuginformationen auf dem Sägeblatt 4 angeordnet sein, welche über eine entsprechende taktile oder optische Vorrichtung auslesbar ist.)

Drehgeber 13, Schwingungsmesser 15 sowie RFID-Antenne 16 sind mit einer Auswertungseinheit 7 verbunden, welche wiederum an eine Datenbank 71 angebunden ist, in der das durch die Auswertungseinheit 7 ermittelte Schwingungsverhalten der einzelnen Sägezähne eines Sägeblatts 4 über die Zeit speicherbar ist. Weiterhin ist die Auswertungseinheit 7 mit einer Eingabeeinheit 72 verbunden, über die ein Wechsel eines Sägeblatts 4 dokumentierbar ist sowie mit einer Ausgabeeinheit 73, über die eine Schwingungshistorie eines Sägeblatts 4 darstellbar ist. Darüber hinaus ist die Auswertungseinheit 7 mit einem Werkzeugwechselsystem 5 gekoppelt, welches im Ausführungsbeispiel in die Zirkularsäge integriert ist und mittels eines Vorratswagens 6 manuell bestückt wird.

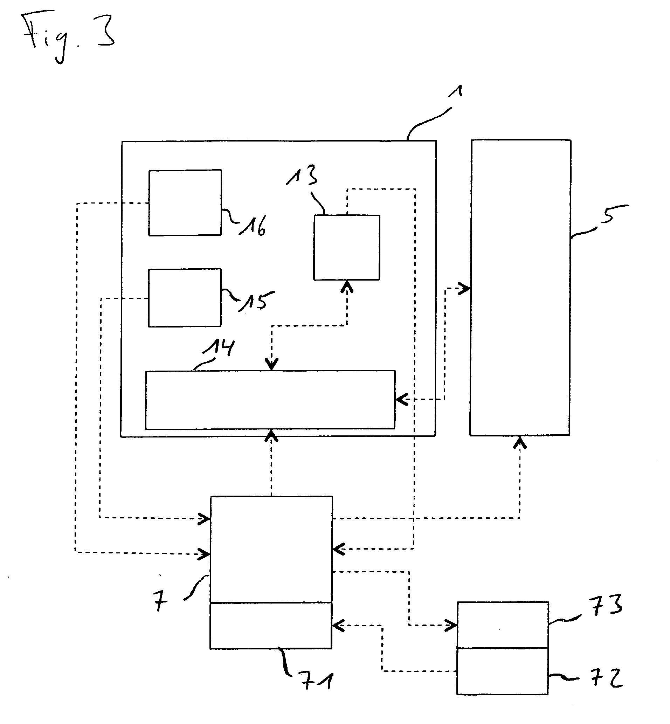

Das in der Zirkularsäge implementierte Verfahren zur Erzielung einer gleichmäßigen Beanspruchung eines Sägeblatts ist schematisch in Figur 3 dargestellt. Im Betrieb der Zirkularsäge werden die Schwingungen des Wirbelaggregats 1 über den Schwingungsmesser 15 kontinuierlich erfasst und an die Auswertungseinheit 7 übermittelt. Gleichzeitig erfolgt eine kontinuierliche Erfassung der Drehposition des Sägeblatts 4 über den Drehgeber 3, dessen Daten ebenfalls an die Auswertungseinheit 7 übermittelt werden. Die Identifizierung des Sägeblatts 4 erfolgt über die RFID-Antenne 16, welche die Daten des an dem Schneidenträgerring 41 des Sägeblatts 4 angeordneten RFID-Chip 43 ausliest und an die Auswertungseinheit 7 weiterleitet. Durch die Auswertungseinheit 7 wird auf Basis der Messdaten von Schwingungsmesser 15 und Drehgeber 13 der kontinuierliche Schwingungsverlauf je Zahn des Sägeblatts 4 ermittelt und über die Zeit in der Datenbank 71 abgelegt. Vor dem Einstechvorgang des Sägeblatts übermittelt die Auswerteeinheit 7 der Steuerung 14 des Wirbelaggregats 1 die Drehposition des Sägeblatts 4 mit dem an Hand der in der Datenbank 71 hinterlegten Schwingungsdaten ermittelten Sägezahns mit der geringsten Abnutzung. Die Abnutzung eines Sägezahns wird dabei an Hand der jeweiligen Schwingungsamplitude des Sägezahns ermittelt, wobei eine höhere Schwingungsamplidute einer höheren Abnutzung gleichgesetzt wird. Die Steuereinheit 14 ist derart eingerichtet, dass das Sägeblatt 4 beim Einstechvorgang in ein Werkstück mit dem von der Auswertungseinheit 7 übermittelten Bereich geringster Abnutzung des Sägeblatts 4 in das Werkstück einsticht.

## Patentansprüche

1. Zirkularsäge, umfassend ein Gehäuse mit einem Wirbelaggregat, an dem eine drehbar gelagerte, mit einem Antrieb verbundene Aufnahme für ein Sägeblatt mit Innenverzahnung angeordnet ist und das über eine Steuereinheit ansteuerbar ist, **dadurch gekennzeichnet, dass** an dem Gehäuse (10) ein Schwingungsmesser (15) angeordnet ist, dass das Wirbelaggregat einen Drehgeber (13) zur Erfassung der Drehposition des Sägeblatts (4) aufweist, und dass eine Auswertungseinheit (7) angeordnet ist, welche mit dem Schwingungsmesser (15) und dem Drehgeber (13) verbunden ist, und die derart eingerichtet ist, dass auf Basis der Messdaten von Schwingungsmesser (15) und Drehgeber (13) ein Schwingungsverlauf je Zahn des Sägeblatts (4) ermittelt wird, wobei die Auswertungseinheit (7) mit der Steuereinheit (14) des Wirbelaggregats (1) verbunden ist, welche derart eingerichtet ist, dass das Sägeblatt (4) beim Einstechvorgang mit einem Bereich geringer gemessener Schwingungsamplitude in das Werkstück einsticht.

2. Zirkularsäge nach Anspruch 1, **dadurch gekennzeichnet, dass** bei jedem Einstechvorgang das Sägeblatt (4) über die Steuereinheit (14) zum Zeitpunkt des Eindringens in das Werkstück derart positionierbar ist, dass das Eindringen mit dem Zahn des Sägeblatts (4) erfolgt, welches die geringste Schwingungsamplitude aufweist.

3. Zirkularsäge nach einem der vorgenannten Ansprüche, **dadurch gekennzeichnet, dass** die Auswertungseinheit (7) mit einer Datenbank (71) verbunden ist, in der das ermittelte Schwingungsverhalten der einzelnen Sägezähne über die Zeit speicherbar ist.

4. Zirkularsäge nach Anspruch 3, **dadurch gekennzeichnet, dass** die Ansteuerung des Wirbelaggregats (1) beim Einstechvorgang durch die Steuereinheit (14) auf Basis der in der Datenbank (71) hinterlegten Schwingungsverhaltens-Historie der einzelnen Sägezähne erfolgt.

5. Zirkularsäge nach Anspruch 3 oder 4, **dadurch gekennzeichnet, dass** die Auswertungseinheit (7) mit einer Warneinrichtung verbunden und derart eingerichtet ist, dass bei Überschreiten eines Schwingungsgrenzwertes einer definierten Anzahl von Sägezähnen ein Warnsignal ausgelöst wird.

6. Zirkularsäge nach einem der Ansprüche 3 bis 5, **dadurch gekennzeichnet, dass** die Auswertungseinheit (7) mit einer Ausgabeeinheit (73) verbunden ist, über die das Schwingungsverhalten der einzelnen Sägezähne eines Sägeblatts (4) über die Zeit abrufbar ist.

7. Zirkularsäge nach einem der Ansprüche 3 bis 6, **dadurch gekennzeichnet, dass** die Auswertungseinheit (7) mit einer Eingabeeinheit (72) verbunden ist, über welche ein Wechsel des Sägeblatts (4) hinterlegbar ist.

8. Zirkularsäge nach einem der vorgenannten Ansprüche, **dadurch gekennzeichnet, dass** das Sägeblatt (4) mit einer eindeutigen Kennung versehen ist, welche mittels einer angeordneten, mit der Auswertungseinheit (7) verbundenen Leseeinheit auslesbar ist.

9. Zirkularsäge nach einem der Ansprüche 5 bis 8, **dadurch gekennzeichnet, dass** ein Werkzeugwechselsystem (5) angeordnet ist, dass mit der Auswertungseinheit (7) verbunden ist, wobei bei Überschreiten eines Schwingungsgrenzwertes einer definierten Anzahl von Sägezähnen ein Werkzeugwechsel ausgelöst wird.

10. Verfahren zur Steuerung eines Sägeblatts einer Zirkularsäge, wobei kontinuierlich die Schwingungen des Gehäuses (10) der Zirkularsäge sowie die Drehposition des Sägeblatts (4) der Zirkularsäge erfasst werden, aus den erfassten Schwingungs- und Drehpositionsdaten jeweils das Schwingungsverhalten eines jeden Sägezahns bzw. definierten Bereichs des Sägeblatts (4) ermittelt wird, und wobei bei jedem Einstechvorgang des Sägeblatts (4) in ein Werkstück das Sägeblatt (4) derart positioniert wird, dass der Einstich mit dem Sägezahn bzw. definierten Bereich des Sägeblatts erfolgt, der die geringste Schwingungsamplitude aufweist.

11. Verfahren nach Anspruch 10, **dadurch gekennzeichnet, dass** das Schwingungsverhalten eines jeden Sägezahnes bzw. definierte Bereichs des Sägeblatts (4) über die Zeit in einer Datenbank (71) gespeichert wird.

12. Verfahren nach Anspruch 10 oder 11, **dadurch gekennzeichnet, dass** die Gehäuseschwingungen hinsichtlich einer definierten maximalen Grenzamplitude überwacht werden, wobei bei Erreichen der Grenzamplitude eine Phasenverschiebung des Antriebs der Zirkularsäge vorgenommen wird.

## Claims

1. Circular saw comprising a housing with a whirling assembly, on which a saw-blade seat with internal gearing is mounted rotatably and connected with a drive unit, and which can be controlled by means of a control unit, **characterised in that** a vibration meter (15) is arranged on the housing (10), that the whirling assembly has an encoder (13) for detecting the rotation position of the saw blade (4), and that an evaluation unit (7) is arranged which is connected with the vibration meter (15) and the encoder (13) and which is set in such a way that a vibration pattern is determined for each tooth of the saw blade (4) based on the data measured by the vibration meter (15) and the encoder (13), where the evaluation unit (7) is connected with the control unit (14) of the whirling assembly (1) which is set in such a way that the saw blade (4), when engaging the workpiece, cuts into the workpiece at a vibration-amplitude range which is measured as being lower.

2. Circular saw according to claim 1, **characterised in that**, when the blade engages the workpiece, the saw blade (4) can be positioned by the control unit (14) at the moment of penetration into the workpiece in such a way that the penetration takes place with the tooth of the saw blade (4) which has the lowest vibration amplitude.

3. Circular saw according to either of the above claims, **characterised in that** the evaluation unit (7) is linked to a data base (71) in which the vibration pattern of the individual saw teeth can be filed over a period of time.

4. Circular saw according to claim 3, **characterised in that**, when the blade engages the workpiece, the whirling assembly (1) is controlled by the control unit (14) on the basis of the historic vibration pattern of the individual saw teeth which is filed in the data base (71).

5. Circular saw according to either claim 3 or claim 4, **characterised in that** the evaluation unit (7) is linked to an alarm device and set in such a way that an alarm signal is triggered when the vibration limit of a defined number of saw teeth is exceeded.

6. Circular saw according to any of the claims 3 to 5, **characterised in that** the evaluation unit (7) is linked to an output unit (73), by means of which the vibration pattern of the individual saw teeth on a saw blade (4) can be shown over a period of time.

7. Circular saw according to any of the claims 3 to 6, **characterised in that** the evaluation unit (7) is linked to an input device (72), by means of which a change of saw blade (4) can be filed.

8. Circular saw according to any of the above claims, **characterised in that** the saw blade (4) is marked with a unique identification which can be shown by means of a suitably located reader unit linked to the evaluation unit (7).

9. Circular saw according to any of the claims 5 to 8, **characterised in that** a tool-changing system (5) is provided which is linked to the evaluation unit (7) in order to trigger a change of tool when the vibration limit of a defined number of saw teeth is exceeded.

10. Process for controlling the blade of a circular saw, where the vibrations of the housing (10) of the circular saw and the rotation position of the saw blade (10) are continuously measured, the vibration pattern of each individual tooth or of a defined area of the saw blade (4) is determined, and where, at every engagement of the workpiece by the saw blade (4), the saw blade (4) is positioned in such a way that the workpiece is engaged by the tooth or by the defined area of the saw blade (4) with the lowest vibration amplitude.

11. Process according to claim 10, **characterised in that** the vibration pattern of each individual tooth or of a defined area of the saw blade (4) is filed over time in a data base (71).

12. Process according to either of the claims 10 or 11, **characterised in that** the housing vibrations are monitored for a certain maximum limit amplitude, and when this limit amplitude is reached, a shift in phase of the drive unit of the circular saw takes place.

## Revendications

1. Scie circulaire comprenant un carter avec groupe à mouvement satellite contre lequel est agencé un réceptacle de lame de scie à denture intérieure, ledit réceptacle prenant appui rotatif sur palier et étant relié à un moteur, ledit groupe étant pilotable via une unité de commande, **caractérisée en ce que** contre le carter (10) est agencé un capteur d'oscillations (15), **en ce que** le groupe à mouvement satellite présente un encodeur rotatif (13) permettant de saisir la position rotative de la lame (4) de scie, et **en ce qu'**est agencée une unité d'analyse (7) reliée au capteur d'oscillations (15) et à l'encodeur rotatif (13), et ajustée de telle sorte que sur la base des données mesurées par le capteur d'oscillations (15) et l'encodeur rotatif (13), une courbe d'oscillations par dent de la lame (4) de scie est déterminée, sachant que l'unité d'analyse (7) est reliée avec l'unité de commande (14) du groupe à mouvement satellite (1), laquelle est ajustée de telle sorte que la lame (4) de scie, pendant la séquence de plongée, plonge dans la pièce lorsque ladite lame se trouve dans une plage d'amplitude mesurée faible.

2. Scie circulaire selon la revendication 1, **caractérisée en ce que** lors de chaque séquence de plongée la lame (4) de scie est positionnable, via l'unité de commande (14) et à l'instant où elle pénètre dans la pièce, de telle sorte que la pénétration ait lieu avec la dent de la lame (4) qui présente l'amplitude d'oscillation la plus faible.

3. Scie circulaire selon l'une des revendications précédentes, **caractérisée en ce que** l'unité d'analyse (7) est reliée à une base de données (71) dans laquelle il est possible d'enregistrer le comportement en oscillation de chacune des dents de scie.

4. Scie circulaire selon la revendication 3, **caractérisée en ce que** le pilotage du groupe à mouvement satellite (1) a lieu, pendant la séquence de plongée pilotée par l'unité de commande (14), sur la base de l'historique du comportement en vibrations des différentes dents de scie, historique qui est mémorisé dans la base de données (71).

5. Scie circulaire selon la revendication 3 ou 4, **caractérisée en ce que** l'unité d'analyse (7) est reliée à un dispositif d'avertissement et ajustée de telle sorte que si un nombre défini de dents de scie dépasse un seuil d'oscillation, un signal d'avertissement se déclenche.

6. Scie circulaire selon l'une des revendications 3 à 5, **caractérisée en ce que** l'unité d'analyse (7) est reliée à une unité d'édition (73) permettant de consulter sur l'échelle temps le comportement en oscillation des différentes dents d'une lame (4) de scie.

7. Scie circulaire selon l'une des revendications 3 à 6, **caractérisée en ce que** l'unité d'analyse (7) est reliée à une unité de saisie (72) permettant de programmer un changement de lame (4) de scie.

8. Scie circulaire selon l'une des revendications précédentes, **caractérisée en ce que** la lame (4) de scie comporte un codage clair qu'il est possible de lire avec une unité de lecture agencée reliée à l'unité d'analyse (7).

9. Scie circulaire selon l'une des revendications 5 à 8, **caractérisée en ce qu'**est agencé un système de changement d'outils (5) relié à l'unité d'analyse (7), sachant qu'un changement d'outil se déclenche lorsqu'un nombre défini de dents de scie dépasse un seuil de vibrations.

10. Procédé destiné à piloter une lame d'une scie circulaire, sachant que sont saisies continuellement les oscillations du carter (10) de la scie circulaire ainsi que la position rotative de la lame (4) de scie circulaire, qu'à partir des données d'oscillation et de position rotative saisies sont déterminés respectivement le comportement en rotation de chaque dent et/ou d'un domaine défini de la lame de scie (4), et sachant qu'à chaque séquence de plongée de la lame (4) de scie dans une pièce, la lame (4) de scie est positionnée de sorte que la plongée ait lieu avec la dent et/ou le domaine défini de la lame de scie qui présente la plus faible amplitude d'oscillation.

11. Procédé selon la revendication 10, **caractérisé en ce que** le comportement oscillant sur l'échelle temps de chaque dent de scie et/ou domaine défini de la lame de scie (4) est enregistré dans une base de données (71).

12. Procédé selon la revendication 10 ou 11, **caractérisé en ce que** les oscillations du carter sont surveillées relativement à une amplitude maximale définie, sachant qu'une fois l'amplitude maximale atteinte, il est procédé à un décalage de phase dans le moteur de la scie circulaire.
